(19) Europäisches Patentamt
European Patent Office
Office européen des brevets

(11) **EP 4 203 138 A1**

(12) **EUROPEAN PATENT APPLICATION**
published in accordance with Art. 153(4) EPC

(43) Date of publication:
**28.06.2023 Bulletin 2023/26**

(21) Application number: **20954702.5**

(22) Date of filing: **28.09.2020**

(51) International Patent Classification (IPC):
**H01M 10/0587** (2010.01)

(52) Cooperative Patent Classification (CPC):
Y02E 60/10; Y02P 70/50

(86) International application number:
**PCT/CN2020/118276**

(87) International publication number:
**WO 2022/061851 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited Ningde, Fujian 352100 (CN)**

(72) Inventors:
• XIAO, Liangzhen
  Ningde, Fujian 352100 (CN)
• ZENG, Qiao
  Ningde, Fujian 352100 (CN)
• HU, Qiaoshu
  Ningde, Fujian 352100 (CN)

(74) Representative: **Icosa**
**83 avenue Denfert-Rochereau**
**75014 Paris (FR)**

(54) **BATTERY**

(57)    A battery includes an electrode assembly and a housing. The electrode assembly includes a first electrode plate, a second electrode plate, and a separator, where the first electrode plate, the separator, and the second electrode plate are wound around a central axis in a first direction. The housing includes a curved surface and a plurality of side walls, the housing further includes a concave part accommodating the electrode assembly, the plurality of side walls enclose to from the concave part, and any three adjacent side walls are connected through the curved surface to form a junction. The three adjacent side walls include a first side wall formed by a main plane parallel to the first direction, a second side wall disposed parallel to the first direction and at an angle to the first side wall, and a third side wall disposed at an angle to the first direction. A distance from a junction between the curved surface and a projection of the second side wall to a projection of the third side wall is R, and the first electrode plate has a region with distance L1 to the third side wall in the first direction, L1 being less than R, so that space utilization of the housing and energy density of the battery are improved. The projections are all orthographic projections on a plane parallel to the first side wall.

FIG. 1

**Description**

**TECHNICAL FIELD**

This application relates to a battery.

**BACKGROUND**

Lithium-ion batteries have many advantages such as high energy density, long cycle life, high nominal voltage, low self-discharge rate, small size, and light weight, and therefore are widely used in the field of consumer electronics. With the rapid development of electric vehicles and mobile electronic devices in recent years, people have increasingly high requirements for the energy density, safety, and cycling performance of batteries. Generally, the battery includes an electrode assembly and a housing for accommodating and sealing the electrode assembly, and the electrode assembly includes a positive electrode plate, a separator, and a negative electrode plate. However, in existing battery structures, due to limitations on structures of the housing and electrode assembly and for preventing contact between the electrode assembly and the housing, a distance between the electrode assembly and a side of the housing of which a tab extends out is relatively large, and thus a housing space is not fully utilized, which is not conducive to improving energy densities of batteries and space utilization.

**SUMMARY**

In view of the foregoing situation, it is necessary to provide a battery that helps improve energy density and space utilization.

This application provides a battery, including an electrode assembly and a housing. The electrode assembly includes a first electrode plate, a second electrode plate, and a separator, where the separator is disposed between the first electrode plate and the second electrode plate. The first electrode plate, the separator, and the second electrode plate are wound around a central axis in a first direction. A housing includes a curved surface and a plurality of side walls. The housing further includes a concave part accommodating the electrode assembly. The plurality of side walls enclose to form the concave part, and any three adjacent side walls are connected through the curved surface to form a junction. The three adjacent side walls include a first side wall formed by a main plane parallel to the first direction, a second side wall disposed parallel to the first direction and at an angle to the first side wall, and a third side wall disposed at an angle to the first direction. A distance from the junction between a projection of the curved surface and a projection of the second side wall to a projection of the third side wall is R, and the first electrode plate has a region with distance L1 to the third side wall in the first direction, L1 being less than R; where the projections are each an orthographic projection on a plane parallel to the first side wall.

In an embodiment of this application, L1 is a minimum distance between the first electrode plate and the third side wall.

In an embodiment of this application, $0.25R < L1 < R$.

In an embodiment of this application, a minimum distance between the second electrode plate and the third side wall is L2, and $L2 < R$.

In an embodiment of this application, the first electrode plate includes a first portion and a second portion connecting to the first portion, the first portion and the second portion are disposed in the first direction, and viewed from a second direction perpendicular to the first direction, the first portion and the second electrode plate overlap, and the second portion exceeds the second electrode plate; the first portion includes a first layer, the second electrode plate includes a first layer, and the first layer of the second electrode plate and the first layer of the first portion are stacked and adjacent to each other, where the first layer of the second electrode plate is located on a side of the first layer of the first portion closest to the central axis; and the second portion includes a first layer, where the first layer of the second portion connects to the first layer of the first portion and is bent towards the first layer of the second electrode plate.

In an embodiment of this application, the first electrode plate and the second electrode plate are each wound to form a multi-layer structure.

In an embodiment of this application, the first portion further includes a second layer, and the second layer of the first portion and the first layer of the second electrode plate are stacked and adjacent to each other, where the second layer of the first portion is located on a side of the first layer of the second electrode plate closest to the central axis; and the second portion further includes a second layer, the second layer of the second portion connects to the second layer of the first portion, and the second layer of the second portion and the first layer of the second portion are stacked and bent towards a same side.

In an embodiment of this application, the second electrode plate further includes a second layer, and the second layer of the second electrode plate and the second layer of the first portion are stacked, where the second layer of the second electrode plate is located on a side of the second layer of the first portion closest to the central axis, and the second layer of the second portion is bent towards the second layer of the second electrode plate.

In an embodiment of this application, the first portion further includes a third layer, and the third layer of the first portion and the second layer of the second electrode plate are stacked, where the third layer of the first portion is located on a side of the second layer of the second electrode plate closest to the central axis; and the second portion further includes a third layer, the third layer of the second portion connects to the third layer of the first portion, and the third layer of the second portion and the second layer of the second portion are stacked and bent towards a same side.

In an embodiment of this application, the first layer of the second portion includes a first endpoint and a second endpoint opposite to each other, the first endpoint connects to the first layer of the first portion, the second endpoint is farther away from the first layer of the first portion, and straight-line distances of the first endpoint and the second endpoint to the curved surface in a third direction are respectively D1 and D2, D1 being greater than D2.

In an embodiment of this application, the second layer of the second portion includes a third endpoint and a fourth endpoint opposite to each other, the third endpoint connects to the second layer of the first portion, the fourth endpoint is farther away from the second layer of the first portion, a distance between orthographic projections of the third endpoint and the first endpoint in the third direction is D3, and a distance between orthographic projections of the fourth endpoint and the second endpoint in the third direction is D4, D3 being greater than D4.

In an embodiment of this application, the third layer of the second portion includes a fifth endpoint and a sixth endpoint opposite to each other, the fifth endpoint connects to the third layer of the first portion, the sixth endpoint is farther away from the third layer of the first portion, a distance between orthographic projections of the fifth endpoint and the third endpoint in the third direction is D5, and a distance between orthographic projections of the sixth endpoint and the fourth endpoint in the third direction is D6, D5 being greater than D6.

In an embodiment of this application, the second electrode plate further includes a third layer, and the third layer of the second electrode plate and the third layer of the first portion are stacked, where the third layer of the second electrode plate is located on a side of the third layer of the first portion closest to the central axis, and the third layer of the second portion is bent towards the third layer of the second electrode plate; the first portion further includes a fourth layer, where the fourth layer of the first portion and the third layer of the second electrode plate are stacked, and the fourth layer of the first portion is located on a side of the third layer of the second electrode plate closest to the central axis; and the second portion further includes a fourth layer, where the fourth layer of the second portion connects to the fourth layer of the first portion, and an included angle between the fourth layer of the second portion and the fourth layer of the first portion is zero.

In an embodiment of this application, the fourth layer of the second portion includes a seventh endpoint and an eighth endpoint opposite to each other, the seventh endpoint connects to the fourth layer of the first portion, the eighth endpoint is farther away from the fourth layer of the first portion, a distance between orthographic projections of the seventh endpoint and the fifth endpoint in the third direction is D7, and a distance between orthographic projections of the eighth endpoint and the sixth endpoint in the third direction is D8, D7 being greater than D8.

In an embodiment of this application, in the first direction, an edge of the separator exceeds an edge of the first electrode plate.

In an embodiment of this application, the edge of the separator exceeds the edge of the first electrode plate by 0.5 mm to 10 mm.

In an embodiment of this application, the separator is further disposed between the first layer of the second portion and an adjacent curved surface.

In an embodiment of this application, an included angle between a line connecting the first endpoint and the second endpoint and the first direction is less than 30° and greater than 0°.

In an embodiment of this application, an included angle between a line connecting the first endpoint and the second endpoint and the first direction is less than 18° and greater than 0°.

In an embodiment of this application, the second electrode plate includes a current collector and an active material layer disposed on a surface of the current collector; in the first direction, an edge of the current collector is flush with an edge of the active substance layer.

In the battery of this application, three adjacent side walls of the housing are connected through a curved surface, and the first electrode plate extends into a space corresponding to a concave part of the housing and the curved surface, improving space utilization of the concave part of the housing and thereby increasing overall energy density of the battery.

## BRIEF DESCRIPTION OF DRAWINGS

FIG. 1 is a schematic structural diagram of a battery according to an embodiment of this application.

FIG. 2 is a schematic diagram illustrating a disassembled structure of a battery according to an embodiment of this application.

FIG. 3 is a schematic structural diagram of a battery from a perspective according to an embodiment of this application.

FIG. 4 is a schematic structural diagram of a battery from a perspective according to an embodiment of this application.

FIG. 5 is a schematic cross-sectional diagram of a battery in a direction Y according to an embodiment of this application.

FIG. 6 is an enlarged partial schematic diagram of a battery according to an embodiment of this application.

FIG. 7 is a schematic diagram of partial computed tomography of a battery according to an embodiment of this application.

FIG. 8 is a schematic diagram of partial computed tomography of a battery according to an embodiment of this application.

FIG. 9 is a schematic diagram of partial computed tomography of a battery according to an embodiment of this application.

FIG. 10 is a schematic diagram of partial computed tomography of a battery according to an embodiment of this application.

Reference signs of main components

| Battery | 100 |
| --- | --- |
| Electrode assembly | 10 |
| Flat portion | 10a |
| Bent end portion | 10b |
| Housing | 30 |
| First electrode plate | 11 |
| Second electrode plate | 13 |
| Separator | 15 |
| Central axis | O-O |
| Curved surface | 31, 31a, 31b, 31c, 31d |
| Side wall | 34 |
| Concave part | 301 |
| First direction | X |
| First side wall | 341 |
| Second side wall | 342, 342a, 342b |
| Third side wall | 343, 343a, 343b |
| Edge | 311, 312, and 313 |
| Junction | 340 |
| Edge | S1, S2, S3, S4, SS1, SS2, SS3, SS4, SX1, SX2, SX3, SX4 |
| Region | R1, R2, AR1, AR2, AR3, AR4, E, E1, E2, E3 |
| Curve edge | A1, A2, A3, A4, C1, C2, C3, C4 |
| End | AS1, AS2, AS3, AS4, AS5, AS6, AS7, AS8, ST1, ST2, ST3, ST4, ST5, ST6, ST7, ST8 |
| First current collector | 110A |
| First active material layer | 110B |
| Second current collector | 130A |
| Second active material layer | 130B |
| First portion | 111 |

(continued)

| Second portion | 113 |
|---|---|
| First layer | 111a, 13a, 113a |
| First endpoint | B1 |
| Second endpoint | B2 |
| Second layer | 111b, 13b, 113b |
| Third endpoint | B3 |
| Fourth endpoint | B4 |
| Third layer | 111c, 13c, 113c |
| Fifth endpoint | B5 |
| Sixth endpoint | B6 |
| Fourth layer | 111d, 113d |
| Seventh endpoint | B7 |
| Eighth endpoint | B8 |
| First tab | 101 |
| Second tab | 103 |
| Outer layer | 13A |

This application will be further described with reference to the accompanying drawings in the following specific embodiments.

## DETAILED DESCRIPTION

The following clearly and detailedly describes the technical solutions in some embodiments of this application. Apparently, the described embodiments are only some rather than all of the embodiments of this application. Unless otherwise defined, all technical and scientific terms used herein shall have the same meanings as commonly understood by those skilled in the art to which this application belongs. The terms used in the specification of this application are merely intended to describe specific embodiments but not intended to constitute any limitation on this application.

The following describes some embodiments of this application in detail. However, this application may be embodied in many different implementations and should not be construed as being limited to the example embodiments set forth herein. Rather, these example embodiments are provided so that this application can be conveyed to those skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected to the element B or an intervening element C may be present therebetween such that the element A and the element B are indirectly connected to each other.

Further, the use of "may" when embodiments of this application are described relates to "one or more embodiments of this application."

The terminology used herein is merely intended to describe specific embodiments but not intended to constitute any limitation on this application. As used herein, the singular forms are intended to include the plural forms as well, unless the context clearly indicates otherwise. It should be further understood that the terms "comprise" or "include" and variations thereof, when used in this specification, specify the presence of stated features, numbers, steps, operations, elements, and/or components but do not preclude the presence or addition of one or more other features, numbers, steps, operations, elements, components, and/or groups thereof.

Spatial related terms such as "above" may be used herein for ease of description to describe the relationship between one element or feature and another element (a plurality of elements) or feature (a plurality of features) as illustrated in the figure. It should be understood that spatial related terms are intended to encompass different orientations of a device or an apparatus in use or operation in addition to the orientations depicted in the figures. For example, if the device in the figures is turned over, elements described as "above" or "over" other elements or features would then be oriented "below" or "beneath" the other elements or features. Thus, the example term "above" can encompass both an orientation of above and below.

It should be understood that when an element or a layer is described as being "on" another element or layer, "connected to" another element or layer, "coupled to" another element or layer, or "closest to" another element or layer, the element or layer may be "directly on" the another element or layer, "directly coupled to" the another element or layer, or "directly connected to" the another element or layer, "directly coupled to" the another element or layer, or "directly closest to" the another element or layer, or there may be one or more intermediate elements or intermediate layers. In addition, "connection", "connected", or the like may also mean "electrically connected" or the like based on its content understood by those skilled in the art. In addition, when one element, component, region, layer, and/or portion is described as being "between" two elements, components, regions, layers, and/or portions, it may be the only element, component, region, layer, and/or portion between the two elements, components, regions, layers, and/or portions, or one or more intermediate elements, components, regions, layers, and/or portions may be present.

It should be understood that although the terms first, second, third, or the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

It should be understood that when two elements are referred to as being parallel, there may be a specific included angle therebetween, with the included angle being between -5° and +5°.

In this application, a first direction X and a second direction Y are perpendicular to each other and parallel to a main plane of a housing, a second side wall of the housing may be disposed in the first direction X, and a third side wall of the housing may be disposed in the second direction Y A direction Z is perpendicular to the first direction X and the second direction Y.

Some embodiments of this application are described in detail below. In absence of conflicts, the embodiments and features in the embodiments may be combined with each other.

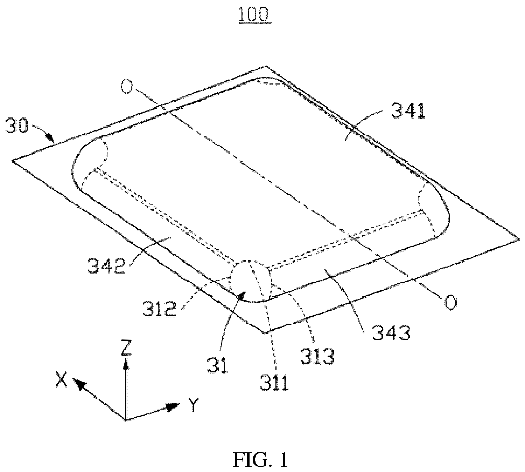

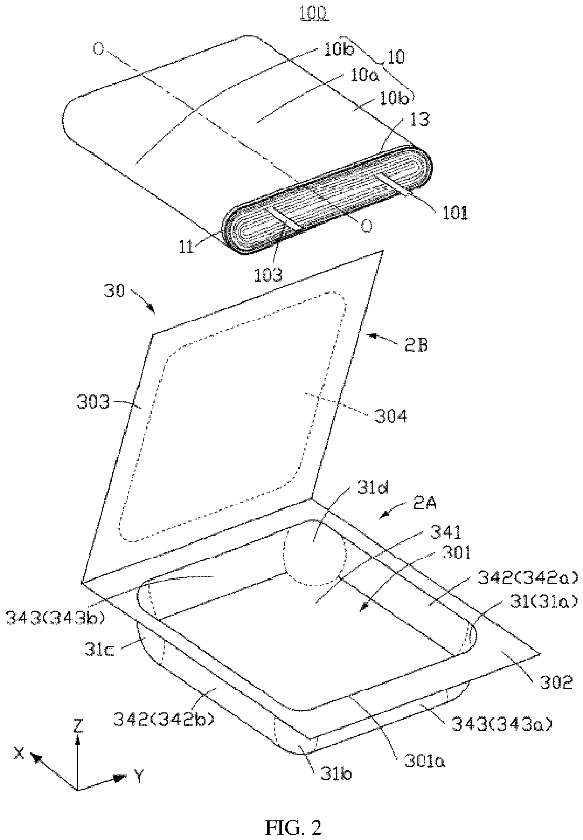

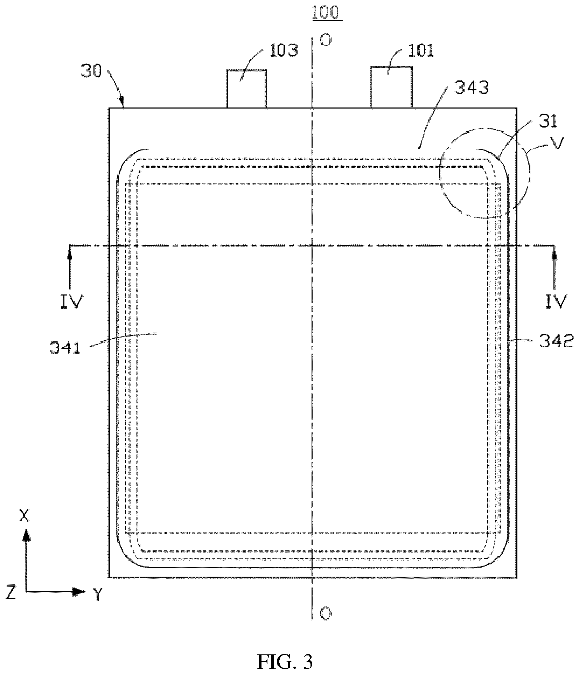

Refer to FIG. 1 and FIG. 2. A battery 100 includes an electrode assembly 10 and a housing 30. With reference to FIG. 3, the electrode assembly 10 is accommodated in the housing 30.

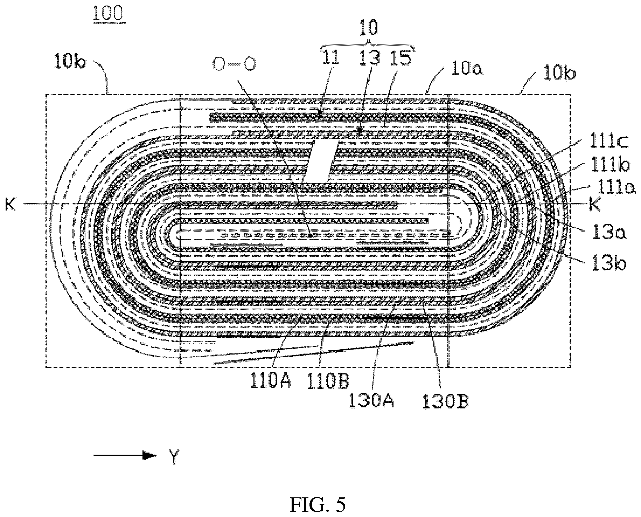

Refer to FIG. 2 and FIG. 5. The electrode assembly 10 includes a first electrode plate 11, a second electrode plate 13, and a separator 15. The separator 15 is disposed between the first electrode plate 11 and the second electrode plate 13, and the first electrode plate 11, the separator 15, and the second electrode plate 13 are wound around a central axis O-O in the first direction X and have a flat portion (namely, a flat portion 10a).

Refer to FIG. 2 and FIG. 3. The housing 30 includes a curved surface 31 and a plurality of side walls 34. The housing 20 further includes a concave part 301 accommodating the electrode assembly 10. The plurality of side walls 34 encloses to form the concave part 301. Any three adjacent side walls 34 are connected through the curved surface 31 to form a junction.

The three adjacent side walls 34 include a first side wall 341 formed by a main plane parallel to the first direction X, a second side wall 342 disposed parallel to the first direction X and at an angle to the first side wall 341, and a third side wall 343 disposed at an angle to the first direction X. An angle between the second side wall 342 and the first side wall 341 is greater than 0° and less than 180°, and an angle between the third side wall 343 and the first direction X is greater than 0° and less than 180°. Preferably, an angle between the second side wall 342 and the first side wall 341 is 85° to 95°, and an angle between the third side wall 343 and the first direction X is 85° to 95°.

In this embodiment, the second side wall 342 is perpendicular to the first side wall 341, and the third side wall 343 is perpendicular to the first direction X. Further, a junction between the second side wall 342 and the first side wall 341 may be arc-shaped, and a junction between the third side wall 343 and the first side wall 341 may be arc-shaped.

In this embodiment, for example, the curved surface 31 is connected to the first side wall 341 through an edge 311, the curved surface 31 is connected to the second side wall 342 through an edge 312, and the curved surface 31 is connected to the third side wall 343 through an edge 313.

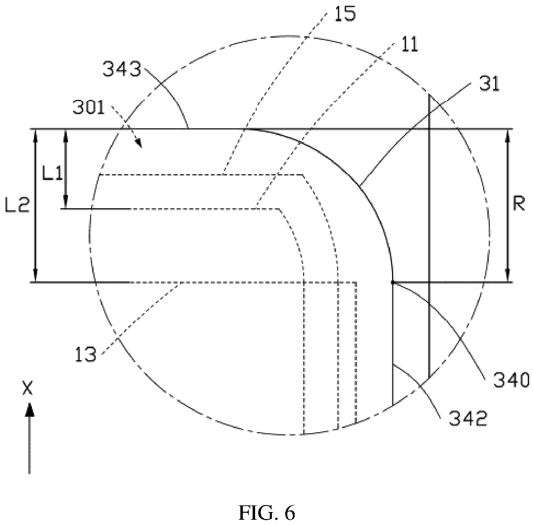

Refer to FIG. 6. An orthographic projection of the curved surface 31 on a plane parallel to the first side wall 341 and an orthographic projection of the second side wall 342 on the plane parallel to the first side wall 341 have a junction 340, and a distance between the junction 340 and an orthographic projection of a plane where the third side wall 343 is located on the plane parallel to the first side wall 341 is R.

The first electrode plate 11 has a region with distance L1 to the third side wall 343 in the first direction X, where L1 is less than R. This improves space utilization of the concave part 301 of the housing 30 and overall energy density of the battery. Preferably, L1 may further satisfy the following relationship: 0.25R<L1<R. While space utilization and energy density of the battery are improved, a risk of the first electrode plate 11 coming into contact with or squeezing the housing 30 is reduced, thereby reducing risks of short circuit of batteries and damage to the housing.

In this embodiment, in the first direction X, length of the first electrode plate 11 is greater than length of the second electrode plate 13. In this embodiment, the first electrode plate 11 is a negative electrode plate and the second electrode plate 13 is a positive electrode plate. This combination reduces precipitation of lithium ions and thereby improves service life of batteries. A minimum distance between the second electrode plate 13 and the third side wall 343 is L2. In some embodiments, preferably, L2 being less than R further improves the space utilization and energy density of the battery.

The housing 30 is further described below.

Refer to FIG. 2. The housing 30 includes a portion 2A and a portion 2B, where the portion 2A fits with the portion 2B to package the electrode assembly 10.

The portion 2A of the housing 30 includes the concave part 301 and a packaging portion 302, where the electrode assembly 10 is accommodated in the concave part 301. The concave part 301 includes an opening 301a, and the packaging portion 302 is formed by extending along a periphery of the concave part 301 from the opening 301a in a direction leaving the center of the opening 301a.

The portion 2B of the housing 30 includes a connecting portion 304 and a packaging portion 303. The packaging portion 303 is formed by extending from the periphery of the connecting portion 304 in a direction leaving the center of the connecting portion 304. The packaging portion 302 and the packaging portion 303 are bonded to each other to seal the electrode assembly 10 accommodated in the concave part 301.

The housing 30 may be made of a material, for example, at least being but not limited to aluminum-plastic film, plastic material, metal material, or composite material of plastic and metal.

In an example of this application, the concave part 301 includes five side walls 34, including one first side wall 341, two second side walls 342 (namely, second side wall 342a and second side wall 342b) disposed in parallel in two opposite ends of the first side wall 341, and two third side walls 343 (namely, third side wall 343a and third side wall 343b) disposed in parallel in other two opposite ends of the first side wall 341. Each second side wall 342 and each third side wall 343 are perpendicular to the first side wall 341, and the second side walls 342 and the third side wall 343 are perpendicular to each other.

In an example of this application, the second side wall 342a, the third side wall 343a, the second side wall 342b, and the third side wall 343b are sequentially disposed in the periphery of the first side wall 341. Junctions between the first side wall 341, the second side wall 342a, and the third side wall 343a are connected through the curved surface 31a; junctions between the first side wall 341, the third side wall 343a, and the second side wall 342b are connected through the curved surface 31b; junctions between the first side wall 341, the second side wall 342b, and the third side wall 343b are connected through the curved surface 31c; and junctions between the first side wall 341, the third side wall 343b, and the second side wall 342a are connected through the curved surface 31d.

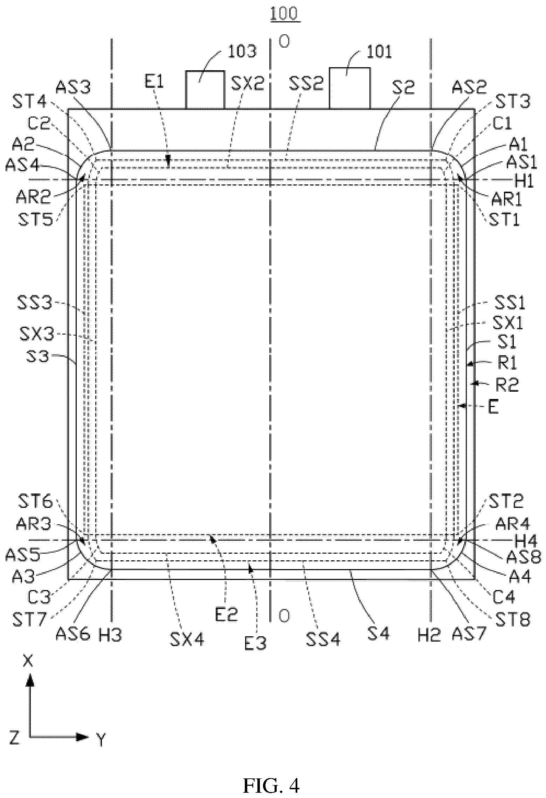

FIG. 4 is a view of the battery 100 when viewed from a side of the first side wall 341 leaving the portion 2B in a direction perpendicular to the first side wall 341, that is, direction Z, and is referred to as a view Z in this application.

In the view Z, a region corresponding to the concave part 301 is a region R1, and a region corresponding to the packaging portion 302 is a region R2. Outer edges of the region R1 include an edge S1 corresponding to the second side wall 342a, an edge S2 corresponding to the third side wall 343a, an edge S3 corresponding to the second side wall 342b, and an edge S4 corresponding to the third side wall 343b. Outer edges of the region R1 further include a curved edge A1 corresponding to the curved surface 31a, a curved edge A2 corresponding to the curved surface 31b, a curved edge A3 corresponding to the curved surface 31c, and a curved edge A4 corresponding to the curved edge 31d.

An end AS1 connects the curved edge A1 and the edge S 1, and an end AS2 connects the curved edge A1 and the edge S2. An end AS3 connects the curved edge A2 and the edge S2, and an end AS4 connects the curved edge A2 and the edge S3. An end AS5 connects the curved edge A3 and the edge S3, and an end AS6 connects the curved edge A3 and the edge S4. An end AS7 connects the curved edge A4 and the edge S4, and an end AS8 connects the curved edge A4 and the edge S1.

An auxiliary line H1 is made along a direction Y from the end AS1 of the curved edge A1, where the auxiliary line H1 may also pass through the end AS4 of the curved edge A2. An auxiliary line H2 is made along the first direction X from the end AS2 of the curved edge A1, where the auxiliary line H2 may also pass through the end AS7 of the curved edge A4. An auxiliary line H3 is made along the first direction X from the end AS3 of the curved edge A2, where the auxiliary line H3 may also pass through the end AS6 of the curved edge A3. An auxiliary line H4 is made along the direction Y from the end AS5 of the curved edge A3, where the auxiliary line H4 may also pass through the end AS8 of the curved edge A4.

A region enclosed by the auxiliary line H1, the auxiliary line H2, and the curved edge A1 is defined as region AR1. A region enclosed by the auxiliary line H1, the auxiliary line H3, and the curved edge A2 is defined as region AR2. A region enclosed by the auxiliary line H3, the auxiliary line H4, and the curved edge A3 is defined as region AR3. A region enclosed by the auxiliary line H2, the auxiliary line H4, and the curved edge A4 is defined as region AR4.

The auxiliary line H1, the auxiliary line H2, the auxiliary line H3, and the auxiliary line H4 are virtual auxiliary lines and do not need to exist in actual products.

A positional relationship between the electrode assembly 10 and the housing 30 is further described below. In this application, the positional relationship between the electrode assembly 10 and the housing 30 may be determined through an X-ray electron microscope or other existing technologies.

In the view Z shown in FIG. 4, a region corresponding to the electrode assembly 10 is region E. Outer edges of the region E include an edge SS 1 and an edge SS3 that extend along the first direction X and are disposed oppositely and an edge SS2 and an edge SS4 that extend along the direction Y and are disposed oppositely. The edge SS1 is disposed closer to the edge S1 as compared with the edge SS3, the edge SS2 is disposed closer to the edge S2 as compared with the edge SS4, the edge SS3 is disposed closer to the edge S3 as compared with the edge SS1, and the edge SS4 is disposed closer to the edge S4 as compared with the edge SS2.

The edge SS1 includes end portion ST1 and end portion ST2, where the end portion ST1 is closer to the curved edge A1 as compared with the end portion ST2, and the end portion ST2 is closer to the curved edge A4 as compared with the end portion ST1. The edge SS2 includes end portion ST3 and end portion ST4, where the end portion ST3 is closer to the curved edge A1 as compared with the end portion ST4, and the end portion ST4 is closer to the curved edge A2 as compared with the end portion ST3. The edge SS3 includes end portion ST5 and end portion ST6, where the end portion ST5 is closer to the curved edge A2 as compared with the end portion ST6, and the end portion ST6 is closer to the curved edge A3 as compared with the end portion ST5. The edge SS4 includes end portion ST7 and end portion ST8, where the end portion ST7 is closer to the curved edge A3 as compared with the end portion ST8, and the end portion ST8 is closer to the curved edge A4 as compared with the end portion ST7.

A curved edge in the region E connecting the end portion ST1 and the end portion ST3 is at least partially located in the region AR1. A curved edge in the region E connecting the end portion ST4 and the end portion ST5 is at least partially located in the region AR2. A curved edge in the region E connecting the end portion ST6 and the end portion ST7 is at least partially located in the region AR3. A curved edge in the region E connecting the end portion ST2 and the end portion ST8 is at least partially located in the region AR4.

In the view Z, the end portion ST3 may be located in the region AR1, the end portion ST4 may be located in the region AR2, the end portion ST7 may be located in the region AR3, and the end portion ST8 may be located in the region AR4, thereby improving the space utilization and energy density of batteries.

The end portion ST1 may be located in or outside the region AR1, the end portion ST5 may be located in or outside the region AR2, the end portion ST6 may be located in or outside the region AR3, and the end portion ST2 may be located in or outside the region AR4. Preferably, the end portion ST1 may be located in the region AR1, the end portion ST5 may be located in the region AR2, the end portion ST6 may be located in the region AR3, and the end portion ST2 may be located in the region AR4, thereby further improving the space utilization and energy density of batteries.

Further, in the view Z shown in FIG. 4, a region corresponding to the first electrode plate 11 is region E1, a region corresponding to the second electrode plate 13 is region E2, and a region corresponding to the separator 15 is region E3. In an example of this application, the edge SS1 and the edge SS3 may be outer edges of the region E2 in the first direction X. The edge SS2 and the edge SS4 may be outer edges of the region E3 in the direction Y.

Outer edges of the region E1 include an edge SX1 and an edge SX3 that extend along the first direction X and are disposed oppositely and an edge SX2 and an edge SX4 that extend along the direction Y and are disposed oppositely. The edge SX1 is disposed closer to the edge S1 as compared with the edge SX3, the edge SX2 is disposed closer to the edge S2 as compared with the edge SX4, the edge SX3 is disposed closer to the edge S3 as compared with the edge SX4, and the edge SX4 is disposed closer to the edge S4 as compared with the edge SX2.

Outer edges of the region E1 further include curved edge C1, curved edge C2, curved edge C, and curved edge C4. The curved edge C1 connects an end portion of the edge SX1 towards the curved edge A1 and an end portion of the edge SX2 towards the curved edge A1, and the curved edge C1 is at least partially located in the region AR1. The curved edge C2 connects an end portion of the edge SX2 towards the curved edge A2 and an end portion of the edge SX3 towards the curved edge A2, and the curved edge C2 is at least partially located in the region AR2. The curved edge C3 connects an end portion of the edge SX3 towards the curved edge A3 and an end portion of the edge SX4 towards the curved edge A3, and the curved edge C3 is at least partially located in the region AR3. The curved edge C4 connects an end portion of the edge SX4 towards the curved edge A4 and an end portion of the edge SX1 towards the curved edge A4, and the curved edge C4 is at least partially located in the region AR4.

The electrode assembly 10 is further described below.

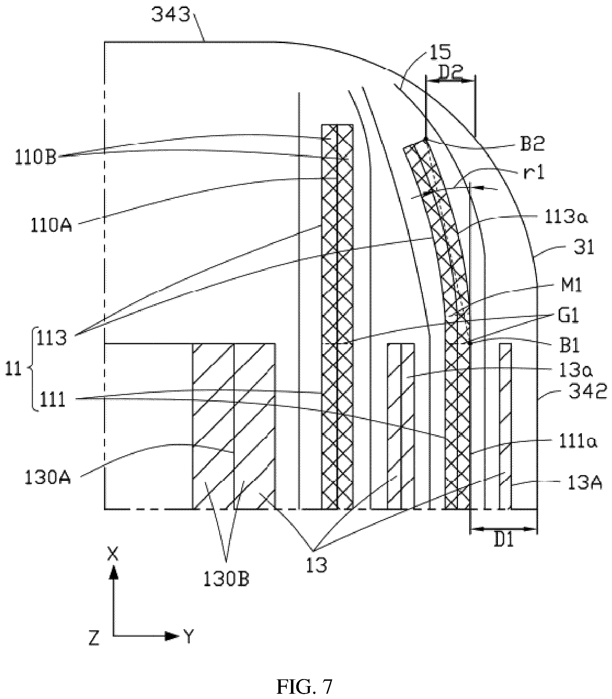

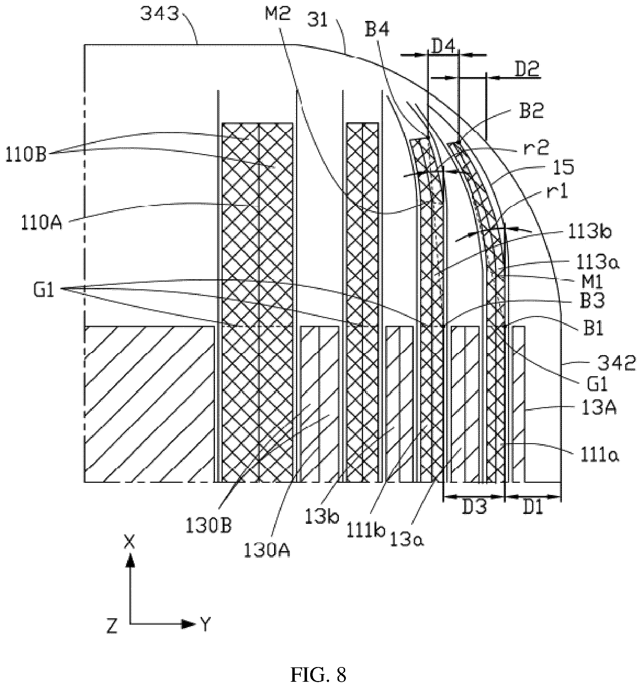

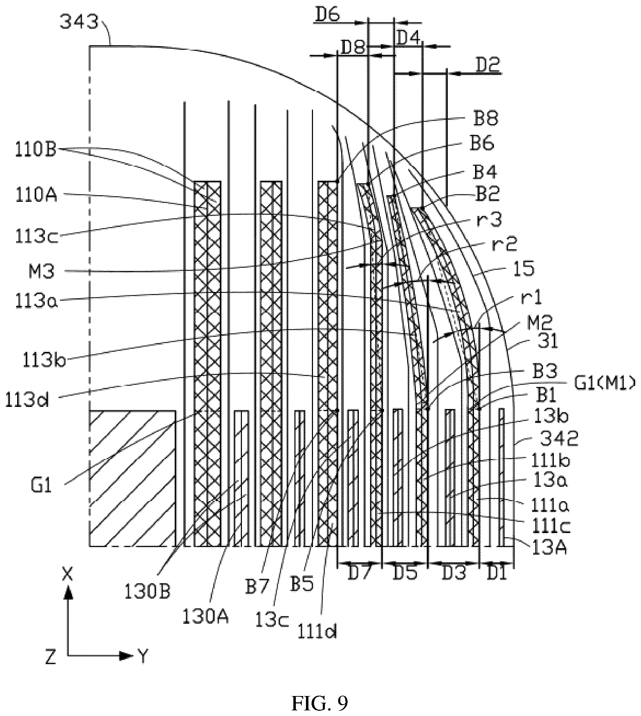

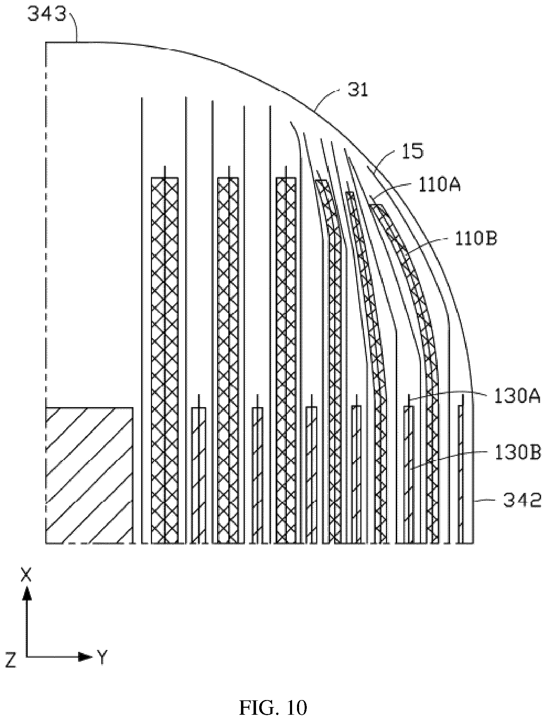

The first electrode plate 11 may include a first current collector 110A and a first active material layer 110B that are stacked. For example, the first current collector 110A may include at least but is not limited to one or two of conductive metal sheets such as nickel foil and copper foil. The first active material layer 110B, for example, may include at least but is not limited to one or more of artificial graphite, natural graphite, soft carbon, hard carbon, graphene, meso-carbon microbeads, silicon-based materials, tin-based materials, lithium titanate, or other metals capable of forming alloys with lithium. Taking FIG. 5 as an example, the first active material layer 110B is disposed on two opposite surfaces of the first current collector 110A. Taking FIG. 7, FIG. 8, and FIG. 9 as an example, in the first direction X, edges of the first active material layer 110B on the two opposite surfaces of the first current collector 110A are respectively flush with edges of the first current collector 110A. In some embodiments, the first active material layer 110B may be disposed only on a side of the first current collector 110A. Taking FIG. 10 as an example, in the first direction X, the edges of the first active material layer 110B may not be flush with the edges of the first current collector 110A.

The second electrode plate 13 may include a second current collector 130A and a second active material layer 130B that are stacked. The second current collector 130A, for example, may include at least but is not limited to one or more of conductive metal sheets such as an aluminum mesh, aluminum foil, or copper foil. The second active material layer 130B, for example, may include at least but is not limited to one or more of lithium cobaltate, lithium nickel cobalt manganate, lithium nickel cobalt aluminate, lithium manganate, lithium nickelate, lithium manganese iron phosphate, lithium vanadium phosphate, lithium vanadyl phosphate, lithium iron phosphate, or lithium-rich manganese-based materials. Taking FIG. 5 as an example, the second active material layer 130B is disposed on two opposite surfaces of the second current collector 130A. Taking FIG. 7, FIG. 8, and FIG. 9 as an example, preferably, in the first direction X, edges of the second active material layer 130B on the two opposite surfaces of the second current collector 130A are respectively flush with edges of the second current collector 130A, thereby increasing energy density of batteries. In some embodiments, the second active material layer 130B may also be disposed only on a side of the second current collector 130A. Taking FIG. 10 as an example, in the first direction X, the edges of the second active material layer 130B may not be flush with the edges of the second current collector 130A.

The separator 15 includes, but is not limited to, at least one selected from polyethylene, polypropylene, polyethylene terephthalate, polyimide, or aramid. For example, polyethylene includes at least one composition selected from high-density polyethylene, low-density polyethylene, and ultra-high-molecular-weight polyethylene. Particularly, polyethylene and polypropylene have a good effect on preventing short-circuit, and can improve stability of the lithium-ion battery through the shutdown effect.

A surface of the separator may further include a porous layer. The porous layer is disposed on at least one surface of the separator and includes inorganic particles and a binder. The inorganic particles are selected from a combination of one or more of aluminum oxide ($Al_2O_3$), silicon oxide ($SiO_2$), magnesium oxide (MgO), titanium oxide ($TiO_2$), hafnium oxide ($HfO_2$), stannic oxide ($SnO_2$), cerium dioxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. The binder may be selected from but is not limited to a combination of one or more of polyvinylidene fluoride, vinylidene fluoride-hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polymethyl methacrylate, polytetrafluoroethylene, or polyhexafluoropropylene.

The porous layer can improve heat resistance, oxidation resistance, and electrolyte infiltration performance of the separator, and enhance adhesion between the separator and a positive electrode or negative electrode.

Refer to FIG. 2 and FIG. 5. The first electrode plate 11, the separator 15, and the second electrode plate 13 are stacked to form a stack. The stack is wound several times to form the electrode assembly 10. In this case, the first electrode plate 11 correspondingly forms a multi-layer structure, and the second electrode plate 13 correspondingly forms a multi-layer structure.

The electrode assembly 10 includes the flat portion 10a and a plurality of bent end portions 10b in the direction Y in the figure. The plurality of bent end portions 10b are respectively distributed on two opposite sides of the center of the flat portion 10a of the battery 100 in the direction Y, where the two opposite sides are respectively left side and right side in FIG. 5. In this embodiment, with reference to FIG. 2 and FIG. 5, at a terminating end of the electrode assembly 10, the first electrode plate 11 is located inside the second electrode plate 13. In some embodiments, at the terminating end of the electrode assembly 10, the first electrode plate 11 may also be located outside the second electrode plate 13.

Refer to FIG. 7. The first electrode plate 11 includes a first portion 111 and a second portion 113 connecting to the first portion 111, where the first portion 111 and the second portion 113 are disposed in the first direction X. As viewed from a second direction perpendicular to the first direction X, for example, from the direction Z, the second electrode plate 13 and the first portion 111 overlap, and the second portion 113 extends beyond the second electrode plate 13 in the first direction X, where the junction of the first portion 111 and the second portion 113 is G1.

In this embodiment, cross-sectional structures of the battery 100 in different directions and depths are viewed from direction of computed tomography.

For example, FIG. 7, FIG. 8, and FIG. 9 are respectively computed tomography images of an example battery 100 at different imaging depths in a direction perpendicular to a first side wall 341, used for viewing, in a direction parallel to the first side wall 341, cross-sectional structures of the battery 100 at different depths in a direction perpendicular to the first side wall 341, that is, direction Z. Therefore, relevant structures of the first electrode plate 11 and the second electrode plate 13 in FIG. 7, FIG. 8, and FIG. 9 described next are corresponding to the bent end portions 10b of the electrode assembly 10. Taking the computed tomography depth to line K-K shown in FIG. 5 as an example, a first layer 111a, a second layer 111b, and a third layer 111c described next are respectively correspond to the junctions between layers of the first electrode plate 11 in the bent end portion 10b of the electrode assembly 10 and line K-K; and a first layer 13a and a second layer 13b respectively correspond to the junctions between layers of the second electrode plate 13 in the bent end portion 10b of the electrode assembly 10 and line K-K. In other examples, in the electrode assembly 10, the winding turns of the first electrode plate 11 and the winding turns of the second electrode plate 13 may be different from those in FIG. 5, and the imaging depth may be different from line K-K. With a different imaging depth, the number of layers of the first electrode plate 11 and the number of layers of the second electrode plate 13 observable in the bent end portion 10b of the electrode assembly 10 through computed tomography may be different, and FIG. 5 is only an example.

In the second direction perpendicular to the first direction X, with directions shown in FIG. 7, FIG. 8, and FIG. 9 being taken as an example, the first portion 111 includes a first layer 111a, the second electrode plate 13 includes a first layer 13a, and the first layer 13a and the first layer 111a of the first portion 111 are stacked and adjacent to each other. The first layer 13a is located on a side of the first layer 111a closest to the central axis O-O. The second portion 113 includes a first layer 113a, and the first layer 113a is formed by extending from one end of the first layer 111a, and the first layer 113a is bent towards the first layer 13a.

The first layer 113a includes a first endpoint B1 and a second endpoint B2 opposite to each other. The first endpoint B 1 connects to the first layer 111a of the first portion 111, and the second endpoint B2 is farther away from the first layer 111a of the first portion 111. Straight-line distances of the first endpoint B 1 and the second endpoint B2 to an adjacent curved surface 31 in a third direction are respectively D1 and D2, D1 being greater than D2. In this embodiment, the third direction is perpendicular to the second side wall 342. In some embodiments, the third direction is not only limited to a direction perpendicular to the second side wall 342, but also may be another direction to the curved surface 31.

In some embodiments, an included angle r1 between a line connecting the first endpoint B1 and the second endpoint B2 and the first direction X is less than 30° and greater than 0°, which better inhibits the first layer 113a from being broken and reduces a risk of falling off of an active material in the first active material layer 110B on the first layer 113a when the first layer 113a is bent. More preferably, the included angle r1 between the line connecting the first endpoint B 1 and the second endpoint B2 and the first direction X is less than 18° and greater than 0°. The first portion 111 may further include the second layer 111b, and the second layer 111b of the first portion 111 and the first layer 13a of the second electrode plate 13 are stacked and adjacent to each other. The second layer 111b of the first portion 111 is located on a side of the first layer 13a of the second electrode plate closest to the central axis O-O. The second portion 113 may further include a second layer 113b, and the second layer 113b is formed by extending from one end of the second layer 111b. The second layer 113b and the first layer 113a are stacked and bent towards a same side.

The second layer 113b includes a third endpoint B3 and a fourth endpoint B4 opposite to each other. The third endpoint B3 connects to the second layer 111b of the first portion 111, and the fourth endpoint B4 is farther away from the second layer 111b of the first portion. A distance between the third endpoint B3 and the first endpoint B1 in the direction Y is D3, and a distance between the fourth endpoint B4 and the second endpoint B2 in the direction Y is D4, D3 being greater than D4.

In some embodiments, an included angle r2 between a line connecting the third endpoint B3 and the fourth endpoint B4 and the first direction X is less than 30° and greater than 0°, which reduces a risk of the second layer 113b being broken and reduces a risk of falling off of an active material in the first active material layer 110B on the second layer 113b when the second layer 113b is bent. More preferably, the included angle r2 between the line connecting the third endpoint B3 and the fourth endpoint B4 and the first direction X is less than 18° and greater than 0°.

The included angle r2 between the line connecting the third endpoint B3 and the fourth endpoint B4 and the first direction X is less than the included angle r1 between the line connecting the first endpoint B1 and the second endpoint B2 and the first direction X.

In the first direction X, a bending start point M2 when the second layer 113b is bent is located between a bending start point M1 when the first layer 113a is bent and the second endpoint B2.

The second electrode plate 13 may further include the second layer 13b, the second layer 13b of the second electrode plate 13 and the second layer 111b of the first portion 111 are stacked, and the second layer 13b of the second electrode plate 13 is located on a side of the second layer 111b of the first portion 111 closest to the central axis O-O. The second layer 113b is bent towards the second layer 13b of the second electrode plate 13.

The first portion 111 may further include a third layer 111c, the third layer 111c and the second layer 13b of the second electrode plate 13 are stacked, and the third layer 111c is located on a side of the second layer 13b of the second electrode plate 13 closest to the central axis O-O. The second portion 113 may further include a third layer 113c, and the third layer 113c is formed by extending from one end of the third layer 111c. The third layer 113c and the second layer 113b are stacked and bent towards a same side.

The third layer 113c includes a fifth endpoint B5 and a sixth endpoint B6 opposite to each other. The fifth endpoint B5 connects to the third layer 111c of the first portion 111, and the sixth endpoint B6 is farther away from the third layer 111c of the first portion 111. A distance between the fifth endpoint B5 and the third endpoint B3 in the direction Y is D5, and a distance between the sixth endpoint B6 and the fourth endpoint B4 in the direction Y is D6, D5 being greater than D6.

In some embodiments, an included angle r3 between a line connecting the fifth endpoint B5 and the sixth endpoint B6 and the first direction X is less than 30° and greater than 0°, which reduces a risk of the third layer 113c being broken and reduces a risk of falling off of an active material in the first active material layer 110B on the third layer 113c when the third layer 113c is bent. More preferably, the included angle r3 between the line connecting the fifth endpoint B5 and the sixth endpoint B6 and the first direction X is less than 18° and greater than 0°.

The included angle r3 between the line connecting the fifth endpoint B5 and the sixth endpoint B6 and the first direction X is less than the included angle r2 between the line connecting the third endpoint B3 and the fourth endpoint B4 and the first direction X.

In the first direction X, a bending start point M3 when the third layer 113c is bent is located between a bending start point M2 when the second layer 113b is bent and the fourth endpoint B4.

The second electrode plate 13 may further include a third layer 13c, the third layer 13c of the second electrode plate 13 and the third layer 111c of the first portion 111 are stacked, and the third layer 13c of the second electrode plate 13 is located on a side of the third layer 111c of the first portion 111 closest to the central axis O-O. The third layer 113c is bent towards the third layer 13c of the second electrode plate 13.

The first portion 111 may further include a fourth layer 111d, the fourth layer 111d and the third layer 13c of the second electrode plate 13 are stacked, and the fourth layer 111d is located on a side of the third layer 13c of the second electrode plate 13 closest to the central axis O-O. The second portion 113 may further include a fourth layer 113d, and the fourth layer 113d is formed by extending from one end of the fourth layer 111d. In this embodiment, an included angle between the fourth layer 113d and the fourth layer 111d is zero.

The fourth layer 113d includes a seventh endpoint B7 and an eighth endpoint B8 opposite to each other. The seventh endpoint B7 connects to the fourth layer 111d of the first portion 111, and the eighth endpoint B 8 is farther away from the fourth layer 111d of the first portion 111. A distance between the seventh endpoint B7 and the fifth endpoint B5 in the direction Y is D7, and a distance between the eighth endpoint B8 and the sixth endpoint B6 in the direction Y is D7, D7 being greater than D8.

In some embodiments, the second electrode plate 13 may further include an outer layer 13A, the outer layer 13A and the first layer 111a of the first portion 111 are stacked, and the outer layer 13A is located on a side of the first layer 111a of the first portion 111 farther away from the central axis O-O, that is, between the first layer 111a of the first portion 111 and an adjacent second side wall 342.

In some embodiments, the number of layers of the second portion in the electrode assembly 10 is not limited to the situations described above, where the number of layers of the second portion bent is also not limited to the situations described above.

In some embodiments, in the first direction X, an edge of the separator 15 may exceed an edge of the first electrode plate 11, further reducing a risk of the first electrode plate 11 coming into contact with the second electrode plate 13.

In some embodiments, the edge of the separator 15 exceeds the edge of the first electrode plate 11 by 0.5 mm to 10 mm, so that after the second portion 113 of the first electrode plate 11 is bent, the edge of the separator 15 can also exceed the edge of the second portion 113 in the first direction X, reducing a risk of short circuit caused by bending the second portion 113 of the first electrode plate 11.

The separator 15 also needs to be disposed between the first layer 113a and an adjacent curved surface 31, so as to prevent the first layer 113a from coming into contact with or squeezing the adjacent curved surface 31 and prevent an inner layer of the housing from being pierced and causing electrochemical corrosion of the housing.

Refer to FIG. 2 and FIG. 3. The battery 100 further includes a first tab 101 and a second tab 103. One end of the first tab 101 is accommodated in the housing 30 and connected to the first electrode plate 11, and the other end of the first tab 101 extends out of the housing 30. One end of the second tab 103 is accommodated in the housing 30 and connected to the second electrode plate 13, and the other end of the second tab 103 extends out of the housing 30.

The battery 100 in this application further includes an electrolyte. The electrolyte may be one or more of a gel electrolyte, a solid electrolyte, or a liquid electrolyte. The liquid electrolyte includes a lithium salt and a non-aqueous solvent.

In some embodiments of this application, the lithium salt is selected from one or more of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. For example, $LiPF_6$ may be selected as the lithium salt because it can provide high ionic conductivity and improve the cycling performance.

The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

Instances of the linear carbonate compound are dimethyl carbonate (DMC), diethyl carbonate (DEC), dipropyl carbonate (DPC), methyl propyl carbonate (MPC), ethylene propyl carbonate (EPC), methyl ethyl carbonate (MEC), or combinations thereof. Instances of the cyclic carbonate compound are ethylene carbonate (EC), propylene carbonate (PC), butylene carbonate (BC), vinyl ethylene carbonate (VEC), and combinations thereof. Instances of the fluorocarbonate compound are fluoroethylene carbonate (FEC), 4,5-difluoro-1,3-dioxolan-2-one, 4,4-difluoro-1,3-dioxolan-2-one, 4,4,5-trifluoro-1,3-dioxolan-2-one, 4,4,5,5-tetrafluoro-1,3-dioxolan-2-one, 4-fluoro-5-methyl-1,3-dioxolan-2-one, 4-fluoro-4-methyl-1,3-dioxolan-2-one, 4,5-difluoro-4-methyl-1,3-dioxolan-2-one, 4,4,5-trifluoro-5-methyl-1,3-dioxolan-2-one, 4-trifluoroMethyl ethylence carbonate, and combinations thereof.

Instances of the carboxylate compound are methyl formate, methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, and combinations thereof.

Instances of the ether compound are dibutyl ether, tetraglyme, diglyme, 1,2-dimethoxyethane, 1,2-diethoxyethane, ethoxymethoxy ethane, 2-methyltetrahydrofuran, tetrahydrofuran, and combinations thereof.

Instances of the another organic solvent are dimethyl sulfoxide, 1,2-dioxolane, sulfolane, methyl-sulfolane, 1,3-dimethyl-2-imidazolidinone, N-methyl-2-pyrrolidone, methylamide, dimethylformamide, acetonitrile, trimethyl phosphate, triethyl phosphate, trioctyl phosphate, phosphate ester, and combinations thereof.

The following provides further descriptions by using examples and comparative examples.

**Example 1**

< 1-1. Preparation of positive electrode plate>

Lithium cobaltate as a positive electrode active material, acetylene black as a conductive agent, and polyvinylidene fluoride (PVDF) as a binder were mixed in a mass ratio of 94:3:3, N-methylpyrrolidone (NMP) was added as a solvent to prepare a slurry with a solid percentage of 75%, and the slurry was well stirred. The slurry was uniformly applied on a surface of an aluminum foil with a thickness of 12 $\mu$m. After drying at 90°C and cold pressing, a positive electrode plate with a 100 $\mu$m thick positive electrode active material layer was obtained. Then the foregoing steps were repeated on the other surface of the positive electrode plate to obtain a positive electrode plate with both surfaces coated with the positive electrode active material layer. The positive electrode plate was cut and then welded with a tab for later use.

< 1-2. Preparation of negative electrode plate>

Artificial graphite as a negative electrode active material and styrenebutadiene rubber as a binder were mixed in a mass ratio of 98:2, then deionized water was added as a solvent to prepare a slurry with a solid percentage of 70%, and the slurry was well stirred. The slurry was uniformly applied on a surface of a copper foil with a thickness of 8 $\mu$m. After drying at 110°C and cold pressing, a negative electrode plate with one surface coated with a 150 $\mu$m thick negative electrode active material layer was obtained. Then the foregoing steps were repeated on the other surface of the negative electrode plate to obtain a negative electrode plate with both surfaces coated with the negative electrode active material layer. The negative electrode plate was cut and then welded with a tab for later use.

< 1-3. Preparation of separator>

Aluminum oxide and polyacrylate ester were mixed in a mass ratio of 90: 10, and dissolved into deionized water to form a ceramic slurry with a solid percentage of 50%. Then, the ceramic slurry was uniformly applied onto one surface of a porous substrate (polyethylene, with a thickness of 7 $\mu$m, an average pore diameter of 0.073 $\mu$m, and a porosity of 26%) through a micro-gravure coating method, and dried to obtain a double-layer structure of a ceramic coating and the porous substrate, where the ceramic coating was 2.5 $\mu$m thick.

Polyvinylidene fluoride and polyacrylate ester were mixed in a mass ratio of 96:4, and dissolved into deionized water to form a polymer slurry with a solid percentage of 50%. Then, the polymer slurry was uniformly applied onto two surfaces of the double-layer structure of the ceramic coating and the porous substrate through the micro-gravure coating method, and dried to obtain the separator, where a single-layer coating formed by the polymer slurry was 2 $\mu$m thick.

< 1-4. Preparation of electrolyte>

In an environment with a water content less than 10 ppm, non-aqueous organic solvents ethylene carbonate (EC), diethyl carbonate (DEC), propylene carbonate (PC), propyl propionate (PP), and vinylene carbonate (VC) were mixed in a mass ratio of 20:30:20:28:2, and then lithium hexafluorophosphate (LiPF$_6$) was added to the non-aqueous organic solvents, dissolved and mixed uniformly to obtain an electrolyte. A mass ratio of LiPF$_6$ to the non-aqueous organic solvent was 8:92.

<1-5. Preparation of lithium-ion battery>

The prepared positive electrode plate (equivalent to a second electrode plate), separator, and negative electrode plate (equivalent to a first electrode plate) were stacked in sequence, so that the separator was disposed between the positive electrode plate and the negative electrode plate for separation. Then winding was performed to obtain an electrode assembly (as shown in FIG. 5). The electrode assembly was placed into the housing (as shown in FIG. 2), where R value of the housing was 2.3 mm. Length, width, and thickness of the housing were designed according to the size of the electrode assembly, so that when the electrode assembly was placed into the housing, L1 was 1.6 mm and L2 was 2.4 mm. The edge of the separator exceeds the edge of the first electrode plate (negative electrode plate) by 0.4 mm. Then the prepared electrolyte was injected, and after formation and degassing, an injection opening on a side of the housing was sealed through hot pressing, so that a lithium-ion battery was prepared. The edge of the positive electrode current collector was flush with the edge of the positive electrode active material layer, the edge of the negative electrode current collector was flush with the edge of the negative electrode active material layer, and the lithium-ion battery was 4 mm thick, 35 mm wide, and 80 mm long. Through computed tomography, when an imaging depth was 2 mm, r1 was 12°, r2 was 7°, and r3 was 2°.

Examples 2-7 and Comparative Example 1 are the same as Example 1 in the method of preparing battery, with differences documented in Table 1 below.

Energy density and drop test were performed for batteries prepared in Examples 1-7 and Comparative Example 1, and the test results are described in Table 1 below. The energy density and drop test methods are as follows.

Method for testing energy density:

The lithium-ion battery was placed in a 25°C±2°C thermostat and left standing for 30 minutes so that the lithium-ion battery reached a constant temperature. The lithium-ion battery at the constant temperature was constant-current charged at 0.5C to a voltage of 4.4 V, then constant-voltage charged at 4.4 V to a current of 0.05C, and discharged at 0.5C to a voltage of 3.0 V A discharge capacity was recorded.

$$\text{Energy density} = \text{discharge capacity}/(\text{length} \times \text{width} \times \text{thickness of the lithium-ion battery}).$$

Method for drop test:

After being fully charged, the lithium-ion battery was freely dropped from a 1.5-meter-high position onto a smooth marble surface. The dropping sequence was: front-back-bottom-top-left-right-upper left corner-upper right corner-lower left corner-lower right corner of the lithium-ion battery, with one drop test for each face or corner successively as one round. After each round of test, the lithium-ion battery was measured for voltage and checked for appearance. 10 rounds of drop tests were performed for each lithium-ion battery. After 10 rounds of drop tests, if not getting hotter, catching fire, exploding, leaking liquid, or emitting smoke, and with a voltage drop of less than 30 mV, the lithium-ion battery passed the test.

## Table 1

| | L1 (mm) | L2 (mm) | Exceeding length of separator (mm) | r1 | r2 | r3 | Energy density (Wh/L) | Drop pass rate |
|---|---|---|---|---|---|---|---|---|
| Example 1 | 1.6 | 2.4 | 0.4 | 12° | 7° | 2° | 683 | 8/10 |
| Example 2 | 1.2 | 2.1 | 0.4 | 17° | 9° | 4° | 691 | 8/10 |
| Example 3 | 0.9 | 1.6 | 0.4 | 27° | 18° | 5° | 697 | 9/10 |
| Example 4 | 0.6 | 1.3 | 0.4 | 30° | 20° | 6° | 701 | 9/10 |
| Example 5 | 1.2 | 2.1 | 0.8 | 17° | 9° | 4° | 691 | 9/10 |
| Example 6 | 1.2 | 2.1 | 1.2 | 17° | 9° | 4° | 691 | 10/10 |
| Example 7 | 1.2 | 2.1 | 1.4 | 18° | 10° | 4° | 691 | 10/10 |
| Comparative Example 1 | 2.3 | 3.9 | 0.4 | 0° | 0° | 0° | 672 | 8/10 |

It can be seen from data in Examples 1-7 and Comparative Example 1 that smaller L1 and L2 indicate that the end portion of the electrode assembly is closer to the housing of the battery and higher space utilization of the battery indicates greater energy density. It can be seen from data in Examples 1-4 that if closer to the housing, the end portion of the electrode assembly has greater r1, r2, and r3, that is, a greater bending angle of the first electrode plate is conducive to the drop pass rate and improves safety performance of the battery. It can be seen from data in Example 2 and Examples 5-7 that a longer length of the separator exceeds the edge of the first electrode plate is more conducive to reducing probability of the first electrode plate piercing the housing when the battery is dropped, thereby helping improve the safety performance of the battery.

In the battery of this application, three adjacent side walls of the housing are connected through a curved surface, and the first electrode plate extends into a space corresponding to a concave part of the housing and the curved surface, improving space utilization of the concave part of the housing and increasing overall energy density of the battery.

In addition, a person of ordinary skill in the art can make various other corresponding changes and modifications according to the technical concept of this application, and all such changes and modifications should fall within the protection scope of this application.

## Claims

1. A battery, **characterized in that**, the battery comprises:

an electrode assembly comprising a first electrode plate, a second electrode plate, and a separator; wherein the separator is disposed between the first electrode plate and the second electrode plate, ; the first electrode plate, the separator, and the second electrode plate are wound around a central axis in a first direction; and a housing comprising a curved surface and a plurality of side walls; wherein the housing further comprises a concave part accommodating the electrode assembly, the plurality of side walls enclose to form the concave part, any three adjacent side walls are connected through the curved surface to from a junction, the three adjacent side walls comprise a first side wall formed by a main plane parallel to the first direction, a second side wall disposed parallel to the first direction and at an angle to the first side wall, and a third side wall disposed at an angle to the first direction;

wherein a distance from the junction between a projection of the curved surface and a projection of the second side wall to a projection of the third side wall is R, and the first electrode plate has a region with distance L1 to the third side wall in the first direction, L1 being less than R; wherein the projections are each an orthographic projection on a plane parallel to the first side wall.

2. The battery according to claim 1, **characterized in that**, L1 is a minimum distance between the first electrode plate and the third side wall.

3. The battery according to claim 1, **characterized in that**, 0.25R<L1<R.

4. The battery according to claim 1, **characterized in that**, a minimum distance between the second electrode plate and the third side wall is L2, and L2<R.

5. The battery according to claim 1, **characterized in that**, the first electrode plate comprises a first portion and a second portion connecting to the first portion, the first portion and the second portion are disposed in the first direction; wherein viewed from a second direction perpendicular to the first direction, the first portion and the second electrode plate overlap, and the second portion exceeds the second electrode plate; wherein the first portion comprises a first layer, the second electrode plate comprises a first layer, the first layer of the second electrode plate and the first layer of the first portion are stacked and adjacent to each other, and the first layer of the second electrode plate is located on a side of the first layer of the first portion closest to the central axis; wherein the second portion comprises a first layer, and the first layer of the second portion connects to the first layer of the first portion and is bent towards the first layer of the second electrode plate.

6. The battery according to claim 5, **characterized in that**, the first electrode plate and the second electrode plate are each wound to form a multi-layer structure.

7. The battery according to claim 5, **characterized in that**, the first portion further comprises a second layer, the second layer of the first portion and the first layer of the second electrode plate are stacked and adjacent to each other, and the second layer of the first portion is located on a side of the first layer of the second electrode plate closest to the central axis; wherein the second portion further comprises a second layer, the second layer of the second portion connects to the second layer of the first portion, and the second layer of the second portion and the first layer of the second portion are stacked and bent towards a same side.

8. The battery according to claim 7, **characterized in that**, the second electrode plate further comprises a second layer, the second layer of the second electrode plate and the second layer of the first portion are stacked, the second layer of the second electrode plate is located on a side of the second layer of the first portion closest to the central axis, and the second layer of the second portion is bent towards the second layer of the second electrode plate.

9. The battery according to claim 8, **characterized in that**, the first portion further comprises a third layer, the third layer of the first portion and the second layer of the second electrode plate are stacked, and the third layer of the first portion is located on a side of the second layer of the second electrode plate closest to the central axis; wherein the second portion further comprises a third layer, the third layer of the second portion connects to the third layer of the first portion, and the third layer of the second portion and the second layer of the second portion are stacked and bent towards a same side.

10. The battery according to claim 9, **characterized in that**, the first layer of the second portion comprises a first endpoint and a second endpoint opposite to each other, the first endpoint connects to the first layer of the first portion, the second endpoint is farther away from the first layer of the first portion, and straight-line distances of the first endpoint and the second endpoint to the curved surface in a third direction are respectively D1 and D2, D1 being greater than D2.

11. The battery according to claim 10, **characterized in that**, the second layer of the second portion comprises a third endpoint and a fourth endpoint opposite to each other, the third endpoint connects to the second layer of the first portion, the fourth endpoint is farther away from the second layer of the first portion, a distance between orthographic projections of the third endpoint and the first endpoint in the third direction is D3, and a distance between orthographic projections of the fourth endpoint and the second endpoint in the third direction is D4, D3 being greater than D4.

**12.** The battery according to claim 11, **characterized in that**, the third layer of the second portion comprises a fifth endpoint and a sixth endpoint opposite to each other, the fifth endpoint connects to the third layer of the first portion, the sixth endpoint is farther away from the third layer of the first portion, a distance between orthographic projections of the fifth endpoint and the third endpoint in the third direction is D5, and a distance between orthographic projections of the sixth endpoint and the fourth endpoint in the third direction is D6, D5 being greater than D6.

**13.** The battery according to claim 12, **characterized in that**, the second electrode plate further comprises a third layer, the third layer of the second electrode plate and the third layer of the first portion are stacked, the third layer of the second electrode plate is located on a side of the third layer of the first portion closest to the central axis, and the third layer of the second portion is bent towards the third layer of the second electrode plate; wherein the first portion further comprises a fourth layer, the fourth layer of the first portion and the third layer of the second electrode plate are stacked, and the fourth layer of the first portion is located on a side of the third layer of the second electrode plate closest to the central axis; wherein the second portion further comprises a fourth layer, the fourth layer of the second portion connects to the fourth layer of the first portion, and an included angle between the fourth layer of the second portion and the fourth layer of the first portion is zero.

**14.** The battery according to claim 13, **characterized in that**, the fourth layer of the second portion comprises a seventh endpoint and an eighth endpoint opposite to each other, the seventh endpoint connects to the fourth layer of the first portion, the eighth endpoint is farther away from the fourth layer of the first portion, a distance between orthographic projections of the seventh endpoint and the fifth endpoint in the third direction is D7, and a distance between orthographic projections of the eighth endpoint and the sixth endpoint in the third direction is D8, D7 being greater than D8.

**15.** The battery according to any one of claims 1 to 14, **characterized in that**, in the first direction, an edge of the separator exceeds an edge of the first electrode plate.

**16.** The battery according to claim 15, **characterized in that**, the edge of the separator exceeds the edge of the first electrode plate by 0.5 mm to 10 mm.

**17.** The battery according to claim 15, **characterized in that**, the separator is further disposed between the first layer of the second portion and an adjacent curved surface.

**18.** The battery according to claim 10, **characterized in that**, an included angle between a line connecting the first endpoint and the second endpoint and the first direction is less than 30° and greater than 0°.

**19.** The battery according to claim 18, **characterized in that**, an included angle between a line connecting the first endpoint and the second endpoint and the first direction is less than 18° and greater than 0°.

**20.** The battery according to claim 1, **characterized in that**, the second electrode plate comprises a current collector and an active material layer disposed on a surface of the current collector; and in the first direction, an edge of the current collector is flush with an edge of the active substance layer.

FIG. 1

FIG. 2

FIG. 3

FIG. 4

FIG. 5

FIG. 6

FIG. 7

FIG. 8

FIG. 9

FIG. 10

## INTERNATIONAL SEARCH REPORT

| International application No. |
| --- |
| **PCT/CN2020/118276** |

**A. CLASSIFICATION OF SUBJECT MATTER**

H01M 10/0587(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; VEN; CNTXT; EPTXT; USTXT; WOTXT; CNKI: 电池, 卷绕, 正极, 负极, 阳极, 阴极, 壳, 袋, 曲面, battery, wind, positive electrode, negative electrode, anode, cathod, shell, bag, curve

**C. DOCUMENTS CONSIDERED TO BE RELEVANT**

| Category* | Citation of document, with indication, where appropriate, of the relevant passages | Relevant to claim No. |
| --- | --- | --- |
| X | CN 109845021 A (SAMSUNG SDI CO., LTD.) 04 June 2019 (2019-06-04) description paragraphs 5-73, figures 1a-1c, figures 3-4 | 1-4, 15-17, 20 |
| Y | CN 109845021 A (SAMSUNG SDI CO., LTD.) 04 June 2019 (2019-06-04) description paragraphs 5-73, figures 1a-1c, figures 3-4 | 5-14, 18-19 |
| X | CN 1518157 A (SAMSUNG SDI CO., LTD.) 04 August 2004 (2004-08-04) description, page 3 line 15 to page 6 line 9, figures 1-5 | 1-4, 15-17, 20 |
| Y | CN 1518157 A (SAMSUNG SDI CO., LTD.) 04 August 2004 (2004-08-04) description, page 3 line 15 to page 6 line 9, figures 1-5 | 5-14, 18-19 |
| X | CN 107546343 A (SAMSUNG SDI CO., LTD.) 05 January 2018 (2018-01-05) description paragraphs 8-46, figures 1A-2B, figures 2A-2B | 1-4, 15-17, 20 |
| Y | CN 107546343 A (SAMSUNG SDI CO., LTD.) 05 January 2018 (2018-01-05) description paragraphs 8-46, figures 1A-2B, figures 2A-2B | 5-14, 18-19 |
| Y | CN 101471452 A (TDK CORPORATION) 01 July 2009 (2009-07-01) description, page 5 paragraph 2 to page 6 paragraph 5, figures 1-2 | 5-14, 18-19 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 June 2021** | **29 June 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

<div align="center">

**INTERNATIONAL SEARCH REPORT**

</div>

| International application No. |
| --- |
| **PCT/CN2020/118276** |

**C.     DOCUMENTS CONSIDERED TO BE RELEVANT**

| Category* | Citation of document, with indication, where appropriate, of the relevant passages | Relevant to claim No. |
| --- | --- | --- |
| Y | CN 208226028 U (SHENZHEN RUILONG NEW ENERGY TECHNOLOGY CO., LTD.) 11 December 2018 (2018-12-11)<br>description, paragraphs 4-35, and figures 1-3 | 7-14, 18-19 |
| A | KR 20060059692 A (SAMSUNG SDI CO., LTD.) 02 June 2006 (2006-06-02)<br>entire document | 1-20 |

Form PCT/ISA/210 (second sheet) (January 2015)

<table>
<tr><td colspan="2" align="center"><b>INTERNATIONAL SEARCH REPORT</b><br>Information on patent family members</td><td colspan="2">International application No.<br><b>PCT/CN2020/118276</b></td></tr>
</table>

| Patent document cited in search report | | | Publication date (day/month/year) | Patent family member(s) | | | Publication date (day/month/year) |
|---|---|---|---|---|---|---|---|
| CN | 109845021 | A | 04 June 2019 | US | 2020044225 | A1 | 06 February 2020 |
| | | | | KR | 20180046145 | A | 08 May 2018 |
| | | | | WO | 2018080080 | A1 | 03 May 2018 |
| | | | | EP | 3534451 | A1 | 04 September 2019 |
| CN | 1518157 | A | 04 August 2004 | KR | 20040066412 | A | 27 July 2004 |
| | | | | KR | 100948848 | B1 | 22 March 2010 |
| | | | | US | 7122271 | B2 | 17 October 2006 |
| | | | | JP | 2004228078 | A | 12 August 2004 |
| | | | | CN | 100411239 | C | 13 August 2008 |
| | | | | JP | 4628682 | B2 | 09 February 2011 |
| | | | | US | 2004142236 | A1 | 22 July 2004 |
| CN | 107546343 | A | 05 January 2018 | US | 2017373286 | A1 | 28 December 2017 |
| | | | | EP | 3264489 | A1 | 03 January 2018 |
| | | | | JP | 2018006326 | A | 11 January 2018 |
| | | | | KR | 20180001230 | A | 04 January 2018 |
| | | | | US | 10388918 | B2 | 20 August 2019 |
| | | | | EP | 3264489 | B1 | 30 January 2019 |
| CN | 101471452 | A | 01 July 2009 | US | 2009169979 | A1 | 02 July 2009 |
| | | | | EP | 2075869 | A1 | 01 July 2009 |
| | | | | JP | 4683044 | B2 | 11 May 2011 |
| | | | | EP | 2075869 | B1 | 01 May 2013 |
| | | | | JP | 2009163926 | A | 23 July 2009 |
| CN | 208226028 | U | 11 December 2018 | None | | | |
| KR | 20060059692 | A | 02 June 2006 | KR | 100624918 | B1 | 18 September 2006 |

Form PCT/ISA/210 (patent family annex) (January 2015)